# EUROPEAN PATENT APPLICATION

(11) **EP 2 630 860 A1**
(43) Date of publication of application: **28.08.2013**
(21) Application number: 13382053.0
(22) Date of filing: 21.02.2013
(51) Int. Cl.: A01G 7/06, A01G 13/00

(54) **Mould for shaping fruits of growing plants**

(30) Priority: 27.02.2012 ES 201200211
(71) Applicant: Zayin Technology, S.L., 04120 La Canada - Almeria (ES)
(72) Inventor: Bermudez Pérez, Francisco José, 04120 LA CAÑADA-ALMERIA (ES); Lopez Martinez, Javier, 04120 LA CAÑADA-ALMERIA (ES)
(74) Representative: Urizar Anasagasti, Jesus Maria

(57) **Abstract**

Mould for shaping fruits of growing plants, consisting of a single piece (1) formed by a continuous profile of noticeably cylindrical configuration, which cut off a profile length according to the length expected for the fruit on which the mould is placed while it is in process of formation, such that as it grows it takes the inner shape of it along its entire length.

## Description

### Object of the invention

The present invention is related to a mould for fruits of plants, thanks to which it is possible to provide a specific, original and different shape from the one they usually have in nature. This mould has remarkable improvements in relation to the moulds of this type known up to now, which improvements affect the ease of placement and removal of the mould on the fruit, and to avoid damaging the fruit both in its growth phase and in the process of removal of the mould.

This invention is characterized by a special design of the mould, based on that it is formed by a single piece, which has areas with less thickness that facilitate the elastic deformation of the mould during closing and opening. The piece itself has a locking clip which prevents the opening of the mould when the growing fruit exerts pressure from within.

### Background of the invention

Some moulds for shaping the growing fruits are known. In general, they are formed by two or more pieces jointed to each other and that are responsible for shaping the fruit, being necessary an additional piece, usually in the form of rod, for closing the mould and preventing its opening when pressed by the growing fruit.

These systems have the disadvantage that several pieces for forming the mould and another additional piece for closing the mould are necessary. In addition, experience shows that due to the edges and discontinuities present in the joints that connect the different pieces that make up the mould, the fruit can be damaged when removing the mould.

Document JP 55180360U describes a device, by way of enveloping mould for fruits of plants, composed of a deformable container, with means of closure, located in the central area of the device. It is an element that comes from the factory with a certain length and configuration and which therefore cannot be adapted on-site to the product concerned. Another drawback of this mould is that the closure is carried out only in the central area, so the pressure of the fruit when it gains weight causes the opening on the sides of this closure and in consequence the product ends up with deformations and breaks in these areas.

### Description of the invention

With the object of making up the single piece mould, facilitating the placement and removal of the mould, and preventing the fruit damage, both in its growth inside the mould and when detaching it from it, a new mould has been devised, the characteristics of which are the object of the present invention.

The invention object of the present specification is related to a mould of those intended to shape plant fruits.

This invention is characterized by a single piece mould, with a continuous profile forming an envelope equipped with a longitudinal opening including in the same a system for closing and opening the mould by way of clip. This closing clip has a special design which prevents its opening when the growing fruit exerts pressure from within. The design of the clip has an extension that allows for easy opening when an external force is exerted on the same.

The shape of the mould is initially open. To facilitate the closing and opening of the mould, it has a reduction of the thickness of its walls in one or several areas. Therefore it has enough elasticity, which allows deforming it temporarily to be able to close the mould and recovering again its initial shape when opening the closing clip.

The inside of the mould surface is smooth, without edges or discontinuities, so the fruit will not be damaged when growing and putting pressure on the walls of the mould, or when opening the mould to remove it from the fruit. The closing area of the mould also internally defines a smooth surface, continuation of the interior walls of the mould, without cracks or fissures that could cause the marking or deterioration of the fruit in its growth.

The mould is preferably made of a plastic transparent or translucent material, for example PVC, such that it allows light from the outside to strike on the fruit, and that the fruit can be seen through the mould. The material used shall be suitable for contact with food.

The mould according to the invention allows its manufacture in a variety of ways. Thus, the fruit can get the shape of a heart, star, square, rectangle, triangle, circle or clover and other geometric forms in general, according to the shape of the mould used.

The mould is preferably designed to shape cucumbers, zucchinis, tomatoes and eggplants, but it can also be used on any other fruit likely to acquire shape.

### Brief description of the drawings

The present invention will be better understood with reference to the following drawings illustrating preferred embodiments of the invention, provided by way of example, and which should not be construed as limiting the invention in any way.
Figure 1 shows a perspective view of the preferred mode of embodiment of the mould in its initially open form.
Figure 2 shows a profile view of the mould of the previous figure.
Figure 3 shows a profile view of the mould of the previous figures, when it is closed.

### Description of a preferred embodiment

In the light of what has been previously stated, the present invention is related to a mould for fruits of plants, this mould consisting of a single piece (1) having at least two areas or faces (2) that define the outline of the mould, separated by a longitudinal opening (3) and by at least one flexible area, with less thickness (4). The longitudinal opening (3) defines by both ends and along the entire length of the piece a closing clip that allows the mould to remain closed, said clip consisting of at least one slit (5) and an extension (6), homologous and located at opposite ends of said opening (3);

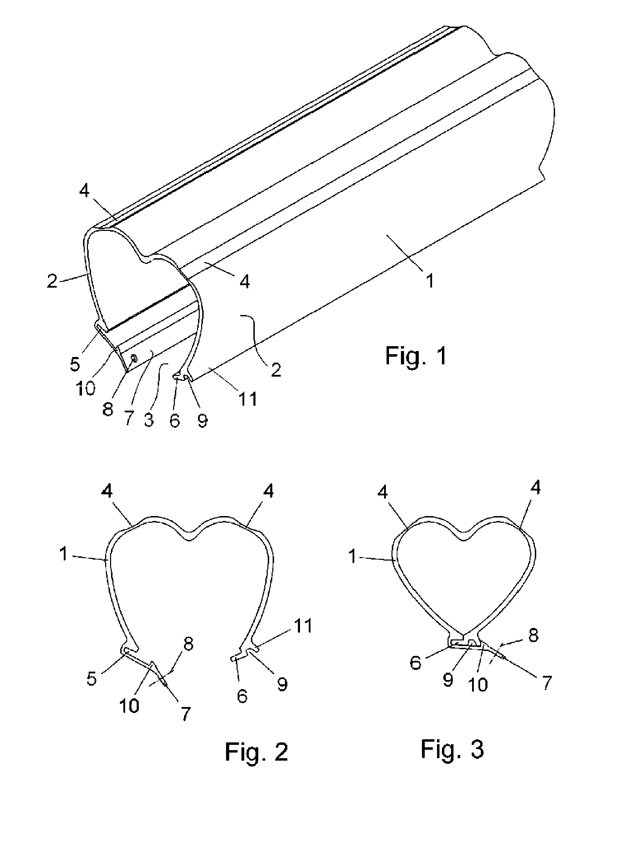

To facilitate the closing and opening of the mould, it has two areas with less thickness than the rest (4), in such a way that they act as elastic hinges and allow for deformation of the piece (1). Figures 1 and 2 show the initial form of the mould without deformation, while figure 3 shows the shape of the mould deformed once it has been closed, where in this form of preferred embodiment the inner part is heart-shaped.

The closing of the mould is carried out when attaching the slit (5) and the extension (6) that are joined by tongue and groove preventing the existence of slots or interior cracks, which could create deformities in the fruit when it grows and completely fills the interior space of the mould. The closing of the mould forming an enveloping body surrounding the growing fruit is ensured by means of an outer closing clip, formed by a tab (10) that engages the stub (11) opposite to the aforementioned extension (6). This closure prevents the opening of the mould by the effect of the pressure exerted by the fruit from within once closed. The slit (9) facilitates the closing of the mould, since when the extension (6) starts to penetrate into the slit (5) the tab (10) is placed on said slit (9) to facilitate this movement; finally, once the extension (6) has fully entered into the slit (5), the tab (10) engages the stub (11) existing behind the slit (9), opposite to the extension (6), setting the closing of the mould along its entire length. (See figure 3).

To facilitate the opening of the closure it has a wing (7), such that when exerting a force on the same, the closing clip opens and the mould can recover its initially open shape.

The holes (8) located in the wing (7) are provided for the introduction of a wire, a thread or a rope, which when it is fastened to the plant or to another close outer element allows the support of the mould.

This configuration allows manufacturing and distributing this element in long continuous profile bars, which the user will cut to the desired length, approximate to the length expected for the fruit on which the mould is placed while it is in process of formation, such that as it grows it takes the inner shape of the same throughout its length.

In this form of preferred embodiment the material used is transparent rigid PVC suitable for food contact.

The essence of this invention is not altered by variations in materials, shape, size and arrangement of the component elements, described without limitation, this being sufficient to carry out its reproduction by an expert.

## Claims

1. Mould for shaping fruits of growing plants, **characterized in that** it consists of a single piece (1) formed by a continuous profile of noticeably cylindrical configuration, comprising:
- at least two faces (2) that define the outline of the mould, separated by a longitudinal opening (3) and by at least one flexible area, with less thickness (4);
- a longitudinal opening (3), the ends of which define:
o closing means along its entire length, consisting of a tab (10) that establishes a closure by way of clicking on the outside by engaging a stub (11) located at the opposite end of the opening (3) wherein said tab (10) is located;
o coupling means formed by a slit (5) and an extension (6), homologous and located at opposite ends of said opening (3), which in their tongue and groove coupling define inside a smooth surface, continuation of the interior walls of the mould without cracks or fissures;
- at least one area with less thickness (4) which by way of elastic hinge facilitates the deformation of the piece, being opened and closed by said longitudinal opening (3),
in order to cut a profile length according to the length expected for the fruit on which the mould is placed while it is in process of formation, such that as it grows it takes the inner shape of it along its entire length.

2. Mould according to claim 1, **characterized in that** one of the ends of the longitudinal opening (3) has a wing (7) that facilitates the opening of the mould by pulling it outwards, which also has a plurality of holes (8), such that in each portion of the profile that is cut there is a hole (8) for hanging the mould where necessary.

3. Mould according to claims 1 and 2, **characterized in that** the extension (6) that engages in the slit (5) at the closure of the mould has a slit (9) on the outside, which is located facing the tab (10) when the extension (6) is at the mouth of the slit (5), in order to facilitate the fitting of both elements (5-6) and subsequent establishment of the joint by the tab (10) in the stub (11).

4. Mould according to claim 1, **characterized in that** when it is closed the inside of the mould has a noticeably triangular shape.

5. Mould according to claim 1, **characterized in that** when it is closed the inside of the mould is heart-shaped.

6. Mould according to claim 1, **characterized in that** when it is closed the inside of the mould is star-shaped.

7. Mould according to claim 1, **characterized in that** when it is closed the inside of the mould is half moon-shaped.

8. Mould according to claim 1, **characterized in that** it has one single area with less thickness (4) on the piece (1).

9. Mould according to claim 1, **characterized in that** it has several areas with less thickness (4) on the piece (1).

10. Mould according to any one of the previous claims, **characterized in that** it is manufactured with rigid, transparent PVC material and suitable for contact with food.
